# EUROPEAN PATENT APPLICATION

(11) **EP 4 312 048 A1**
(43) Date of publication of application: **31.01.2024**
(21) Application number: 22306138.3
(22) Date of filing: 29.07.2022
(51) Int. Cl.: G01S 5/00, H04W 12/104, H04W 64/00, H04W 84/06

(54) **A METHOD FOR CONSOLIDATING AT LEAST A TRACKING AREA DEPLOYMENT FOR A NON-GEOSTATIONARY ORBITAL SATELLITE CONSTELLATION AND CORRESPONDING SYSTEM**

(71) Applicant: THALES DIS FRANCE SAS, 92190 Meudon (FR)
(72) Inventor: FINE, Jean-Yves, 92190 Meudon (FR); COLLET, Hervé, 92190 MEUDON (FR)
(74) Representative: Scheer, Luc

(57) **Abstract**

The invention concerns a method for consolidating at least a tracking area deployment for a non-geostationary orbital satellite constellation in a system comprising a terminal 11 cooperating with a secure element 10, this method comprising:
- sending 27 from the terminal 11 to a server 13, 14 of a mobile network operator through the network 12 of the mobile network operator a message comprising a tracking area list composed of one or more tracking area identifiers along with the GNSS coordinates of the terminal;
- checking at the server 13, 14 if the tracking area list corresponds to the GNSS coordinates and:
o if yes, consolidating a geo-localized tracking areas map at the server 13, 14;
o if no, raising an inconsistency alarm for the terminal at the server 13, 14.

## Description

The present invention relates to wireless network communications, and, more particularly, to a USIM or application based system and method to consolidate multiple TACs deployment in case of satellite moving cells on earth. The invention applies to 4G to 5G telecommunication systems and further technologies (6G,...).

The invention applies to non-geostationary orbital satellite (NGSO) constellations, for example, LEO (Low Earth Orbit) satellite systems or MEO systems and has to be considered in the case of a NGSO satellite constellation connected to a core network as per 3GPP Release 17 assumptions for non-terrestrial networks (NTN).

There is increasing interest and participation in 3GPP from the satellite communication industry, with companies and organizations convinced of the market potential for an integrated satellite and terrestrial network infrastructure in the context of 3GPP 4G and later. 3GPP standards make Non-Terrestrial Networks - including satellite segments -a recognized part of 3GPP 4G and later connectivity infrastructure. A low Earth orbit is an Earth-centered orbit with an altitude of 2,000 km or less, or with at least 11.25 periods per day and an eccentricity less than 0.25. Most of the manmade objects in outer space are in LEO. LEO satellites orbit around the earth at a high speed but over a predictable or deterministic orbit.

For example, in LEO scenario with 600 km height, a speed of 7.56 km/sec and a beam spot diameter of around 70 km, there will be frequent cell reselection at less than every 10 seconds. Thus, for LEO satellites, the cells are moving over time, albeit in a predictable manner. Hence, LEO satellites can estimate the target cell based on its own movement speed, direction and height from the ground, instead of relying on UE's (User Equipment) measurement reports. Once the LEO satellite's cells or beams are swept past, most (if not all) UEs need to re-select the same cell or beam. The network can estimate UEs' locations by using Global Navigation Satellite System (GNSS) or by capturing location information from the core networks.

The current GNSS systems are GPS, Glonass, Galileo and BeiDou.

The LEO system can be connected to a 4G infrastructure (IoT-NTN standing for non-terrestrial network for internet of things) or a 5G infrastructure (NR-NTN standing for New Radio for Non Terrestrial Network) of a MNO (Mobile Network Operator) or later version of infrastructure. The UE can be an loT device or a user device, typically a smartphone. Each satellite of a LEO constellation is connected to a terrestrial gateway through a feeder link. The terrestrial gateway can be connected to a base station (gNodeB) connected to a terrestrial antenna or, in another configuration, the terrestrial gateway only communicates with the satellites through the feeder link.

There are two problems that are been addressed by the present invention with the existing LEO communication systems:
The first problem is the verification of Tracking Area (TA) broadcast.

Two types of satellites are possible for LEO constellation: With steerable beam (high end segment) and non-steerable beam (low end segment, like IoT-NTN with mini satellites). In case of non-steerable beams, the cell footprint is moving onto the earth surface, according satellite motion (moving cell case).

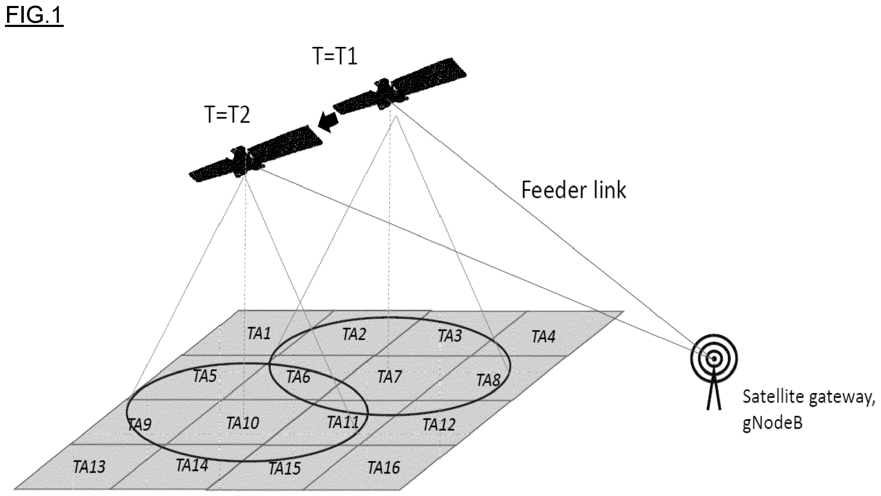

Figure 1 represents a LEO satellite covering different cell patterns on the earth. The cell patterns are tracking areas (TA). Here 16 TA are represented, referenced TA1 to TA16. They are pattern fix on earth.

At a time T1, the satellite the following TACs will be broadcasted by the cell: TA1, TA2, TA3, TA4, TA6, TA7, TA8, TA11 and TA12.

At a further time T2, the satellite has moved and the TACs that will be broadcasted by the cell are: TA5, TA6, TA7, TA9, TA10, TA11, TA14 and TA15.

The circles represent the instantaneous cell coverage on the earth surface.

The feeder link is also represented for time T1 and T2 (the feeder link is the radio link between the satellite and the satellite gateway).

In 3GPP Release 17 (the first 3GPP release introducing Non Terrestrial Network / Satellite as possible Radio Access), it is considered that:
- Tracking Areas (TA) are required to be fix on earth;
- Huge satellite cell size can cover several TAs (see figure 1).

It has been decided that the Radio Access Network will broadcast in the cell the list of Tracking Area Codes (TACs) or identifiers, corresponding to Tracking Areas that have been defined on the earth surface through network planning, for the zone currently enlighten by the satellite radio cell.

This means that the system shall be able to dynamically change broadcasted TA list following the motion of one satellite and be able to hand-off, through the feeder link switch procedure, the entering TA list to the new satellite replacing the previous one.

On the terminal side, for UE with a fixed position, the TA list shall remain constant. Considering possible LEO constellation deployment schemes:
- MNO operating the satellite communication
- MNO in contract with a satellite communication operator
- MOCN (Multiple Operator Core Network - several MNOs) sharing satellite communication operator access.

It is not obvious in all configurations to verify that the Tracking Area network planning for a given operator is effectively deployed on the field:
- there must be a synchronicity between the systems for ensuring in real time the modification of the list of the TACs sent in function of the geographical area seen by the satellite;
- the handover to a new satellite has to be managed well.

If not, wrong TA perception by the UE may lead to inconsistencies in mobility management procedure of the network and then Tracking Area broadcast need to be frequently checked.

The second problem is the verification of UE reported location.

TR 38.882 Study on requirements and use cases for network verified UE location for Non-Terrestrial-Networks (NTN) in NR (Release 18, June2022) states:
"In 3GPP TR 22. 926, it has been identified that "To support regulated services and features (e.g. Public Warning System, Charging and Billing, Emergency calls, Lawful Intercept, Data Retention Policy in cross-border scenarios and international regions, Network access), 3GPP networks should have the capability to locate each UE in a reliable manner and determine the policy that applies to their operation depending on their location and/or context."... Relying only on the GNSS based location information reported by the UE is not considered reliable by SA3-LI. The UE reported location information (for example determined with its GNSS receiver), could be erroneous due to intentional (e.g. maliciously tampering by user or by any party) or unintentional (e.g. interference, GNSS drift) causes, hence it cannot be considered trusted by network operators."

Thus, there is a problem of reliability of the UE reported location information.

The present invention proposes a way to mitigate the risk and check consistency of UE reported location.

More precisely, the invention proposes a method for consolidating at least a tracking area deployment for a non-geostationary orbital satellite constellation in a system comprising a terminal cooperating with a secure element, the method comprising:
- sending from the terminal to a server of a mobile network operator through the network of the mobile network operator a message comprising a tracking area list composed of one or more tracking area identifiers along with the GNSS coordinates of the terminal;
- checking at the server if the tracking area list corresponds to the GNSS coordinates and:
   ∘ if yes, consolidating a geo-localized tracking areas map at the server;
   ∘ if no, raising an inconsistency alarm for the terminal at the server.

Preferably, the message also comprises the time at which the message is sent.

In a preferred embodiment, the tracking area list and the GNSS coordinates are requested and get by the secure element from the terminal.

Preferably, the secure element is a USIM.

In another preferred embodiment, the tracking area list and the GNSS coordinates are requested to the terminal by an application installed in the terminal.

Preferably, the message is signed and/or encrypted with keys known by the mobile network operator.

The message is advantageously sent by the terminal through a channel requested by the secure element or an application installed in the terminal, the channel being:
∘ a SMS channel, or
∘ a http channel, or
∘ a tcp channel, or
∘ a NIDD channel.

The invention also concerns a system for consolidating at least a tracking area deployment for a non-geostationary orbital satellite constellation in a system comprising a terminal cooperating with a secure element, this system comprising a server receiving from the terminal through the network of a mobile network operator a message comprising a tracking area list composed of one or more tracking area identifiers along with the GNSS coordinates of the terminal, the server comprising means for checking if the tracking area list corresponds to the GNSS coordinates and:
- if yes, consolidating a geo-localized tracking areas map at the server;
- if no, raising an inconsistency alarm for the terminal at the server.

The invention will be better understood by reading the following description of the figures that represent:
- Figure 1 a LEO satellite covering different Tracking Areas on the earth;
- Figure 2 a diagram representing exchanges between different entities involved in the method of the invention.

Figure 1 has been described in the scope of the state of the art.

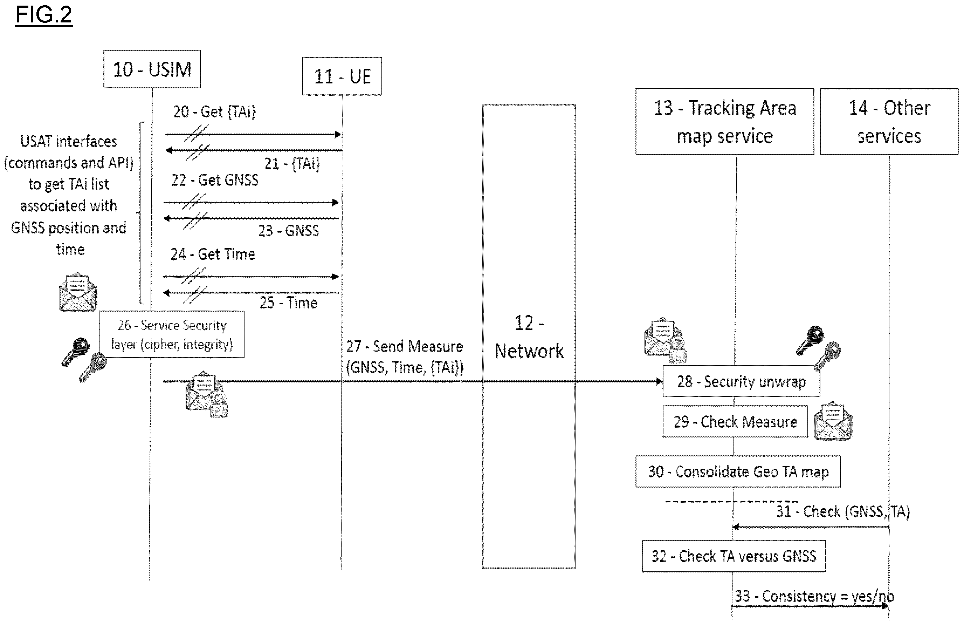

Figure 2 is a diagram representing exchanges between different entities involved in the method of the invention.

In this figure, the different entities are:
- A USIM 10 available in the UE;
- A User Equipment UE 11 (terminal) that can be a mobile, like a smartphone or an loT device;
- A network 12 of a Mobile Network Operator (MNO)
- A server of this MNO composed here by two entities: A tracking area map service 13 and other services 14.

The method of the invention is based on the generation of a message by the USIM 10 (or by an application installed in the UE 11) comprising at least a list of tracking areas in the vicinity of the UE 11 and the GNSS coordinates of the UE for a given time. This message is sent to the server 13, 14 of the MNO and the server checks if the list of the TAs correspond to the GNSS coordinates.

In figure 2, a USIM 10 is used for getting the components of the message (but, as already said, it could be an application installed in the UE 11).

In a first step 20, the USIM 10 requests a list of tracking areas (TA) to the UE 11. This list is named TAi and comprises tracking area identifiers. The USIM request can be done through a command « Provide Local Info ».

At step 21, the UE 11 sends this list to the USIM 10.

At step 22, the USIM 10 requests from the UE 11 its GNSS coordinates (longitude and latitude).

At step 23, the UE 11 sends the GNSS coordinates to the USIM 10.

At step 24 USIM 10 requests to the UE 11 the current time.

At step 25, the UE 11 sends the current time to the USIM 10. The USIM request can be done through a command « Provide Local Info ».

Steps 24 and 25 are optional since they take into account the delay for transmitting a message (explained further) from the UE 11 to the server 13, 14.

Steps 20 to 25 are realized through the USAT interfaces (commands and APIs).

Once the USIM 10 has the list of tracking areas and the GNSS coordinates (and optionally the current time), it builds a message to be sent to the server 13, 14 comprising these measures.

At step 26, the message is preferably signed and/or encrypted with keys known by the mobile network operator by a service security layer 26 for ensuring the integrity and/or confidentiality of the message.

At step 27, the encrypted message comprising the tracking area list (tracking area identifiers) along with the GNSS coordinates of the UE 11 (and optionally the current time) is sent from the UE 11 to the server 13, 14 of the MNO through the network 12 of the MNO.

The message is sent by the UE 11 through any channel. It can be a SMS channel, a http channel, a tcp channel or a NIDD (Non Data IP Delivery) channel for example.

This channel is preferably decided by the USIM 10 (or, as already said, by an application installed in the UE 11).

The server 13, 14 is here constituted by two entities but a single entity can perform steps 28 to 33. These steps are now described.

At step 28, the tracking area map service 13 verifies integrity and/or decrypts the received message with keys of the MNO. The result message is thus the same as represented before step 26.

At step 29, the tracking area map service 13 checks the measures (tracking area identifiers, GNSS coordinates and optionally time) to verify if they are coherent.

It is verified if the tracking identifiers correspond to the GNSS coordinates.

If yes, the tracking area map service 13 can consolidates at step 30 a geo-localized tracking areas map, if necessary.

If no (all measures are coherent), no consolidation is necessary. If small shifts are detected, the map is updated.

At step 31, the entity "Other services" 14 requests verification of coherency between a zone pointed by GNSS coordinates and a tracking area identifier, to verify if such TAi is effectively broadcasted for such zone.

At step 32, the entity "Tracking Area map service" 13 checks the consistency of GNSS coordinates and the tracking area identifier provided by the entity "Other services" 14 with its consolidated geo-localized tracking areas map. If GNSS coordinates and the tracking area identifier is consistent with information in consolidated geo-localized tracking areas map then consistency check result is "Consistency = yes" else result "Consistency = no". At step 33, the entity "Tracking Area map service" 13 returned the consistency check result (yes or no) to the entity "Other services" 14.

If the server 13, 14 detects that there is no correspondence between the tracking area list and the GNSS coordinates, an inconsistency alarm is raised for the UE 11 at the server 13, 14. This alarm can conduct to the disabling of the functions of the UE 11.

The USIM 10 can be installed on any secure element (for example on a removable SIM card, on an eUICC (embedded UICC)) or in an iUICC (integrated UICC). The USIM 10 form factor is not important.

A possible application of the invention is the validation of the position of the satellites (important for regulated services like public safety, lawful interception, emergency calls...).

The tracking area list and the GNSS coordinates are requested by the secure element and get from the terminal. When an application installed in the terminal is used, the tracking area list and the GNSS coordinates are requested to the terminal by this application installed in the terminal.

The message sent by the terminal can be sent through:
- a SMS channel, or
- a http channel, or
- a tcp channel, or
- a NIDD (Non Data IP Delivery) channel.

The invention also concerns a system for consolidating at least a tracking area deployment for a non-geostationary orbital satellite constellation in a system comprising a terminal cooperating with a secure element, a server receiving from the terminal through the network of a mobile network operator a message comprising a tracking area list composed of one or more tracking area identifiers along with the GNSS coordinates of the terminal and optionally time, the server comprising means for checking if the tracking area list corresponds to the GNSS coordinates and:
- if yes, consolidating a geo-localized tracking areas map at the server;
- if no, raising an inconsistency alarm for the terminal at the server.

The invention applies to LEO satellite systems and more generally to non-geostationary orbital satellite constellations.

By building in real time a broadcasted Tracking Area coverage map, the invention enables to verify if a GNSS position, associated to {TAi}, as provided by the UE to the USIM then to the network (or directly to the network if an application is installed in the UE), is fake or not.

The invention concerns any USIM implementation following 3GPP (third generation partnership project) standards that could implement it. Corresponding service can be deployed on the internet for the benefit of telecom operators.

The invention permits to:
- provide measures to server via the USIM application, with dedicated OTA security layer (secured SMS or HTTPS with MNO keys), enabling data collect whatever the UE state (IDLE, CONNECTED);
- consolidate measures from different UEs, so different implementations, and to centralize measures in single map, that can be used to check if a given UE is faking GNSS;
- leverage on USIM assets (portability, security, MNO ownership) to provide a trustable solution for the MNO.

In 3GPP release 17, it is known to send from the terminal the GNSS position with {(TAi}) to gNB but in connected mode only to have secured message between UE and gNB.

## Claims

1. A method for consolidating at least a tracking area deployment for a non-geostationary orbital satellite constellation in a system comprising a terminal (11) cooperating with a secure element (10), wherein said method comprises:
- sending (27) from said terminal (11) to a server (13, 14) of a mobile network operator through the network (12) of said mobile network operator a message comprising a tracking area list composed of one or more tracking area identifiers along with the GNSS coordinates of said terminal;
- checking at said server (13, 14) if said tracking area list corresponds to said GNSS coordinates and:
∘ if yes, consolidating a geo-localized tracking areas map at said server;
∘ if no, raising an inconsistency alarm for said terminal at said server.

2. A method according to claim 1, wherein said message also comprises the time at which said message is sent.

3. A method according to claim 1 or 2, wherein said tracking area list and said GNSS coordinates are requested and get by said secure element (10) from said terminal (11).

4. A method according to any of the claims 1 to 3, wherein said secure element (10) is a USIM.

5. A method according to claim 1 or 2, wherein said tracking area list and said GNSS coordinates are requested to said terminal (11) by an application installed in said terminal (11).

6. A method according to any of the claims 1 to 5, wherein said message is signed and/or encrypted with keys known by said mobile network operator.

7. A method according to any of the claims 1 to 6, wherein said message is sent by said terminal (11) through a channel requested by said secure element (10) or an application installed in said terminal (11), said channel being:
∘ a SMS channel, or
∘ a http channel, or
∘ a tcp channel, or
∘ a NIDD channel.

8. A system for consolidating at least a tracking area deployment for a non-geostationary orbital satellite constellation in a system comprising a terminal (11) cooperating with a secure element (10), wherein said system comprises a server (13, 14) receiving from said terminal (11) through the network (12) of a mobile network operator a message comprising a tracking area list composed of one or more tracking area identifiers along with the GNSS coordinates of said terminal (11), said server (13, 14) comprising means for checking if said tracking area list corresponds to said GNSS coordinates and:
- if yes, consolidating a geo-localized tracking areas map at said server (13, 14);
- if no, raising an inconsistency alarm for said terminal (11) at said server (13, 14).
